# EUROPEAN PATENT SPECIFICATION

(11) **EP 3 081 362 B1**
(45) Date of publication and mention of the grant of the patent: **09.09.2020**
(21) Application number: 14869278.3
(22) Date of filing: 03.12.2014
(51) Int. Cl.: B29C 45/26, B01D 29/01, B01D 35/02, B29D 28/00

(54) **MESH FILTER**
SIEBFILTER
FILTRE À TAMIS

(30) Priority: 13.12.2013 JP 2013257959; 20.01.2014 JP 2014007789; 06.03.2014 JP 2014043488
(43) Date of publication of application: 19.10.2016
(73) Proprietor: Enplas Corporation, Kawaguchi-shi, Saitama 332-0034 (JP)
(72) Inventor: SUZUKI, Akihiro, Kawaguchi-shi Saitama 332-0034 (JP)
(74) Representative: Prinz & Partner mbB
(86) International application number: PCT/JP2014/081928
(87) International publication number: WO 2015/087746

(56) References cited:
- EP-A1- 3 037 238
- DE-A1- 19 744 361
- DE-A1-102004 002 963
- JP-A- H0 379 320
- JP-A- S6 485 363
- JP-A- H05 293 858
- JP-A- H06 126 784
- JP-A- H07 100 317
- JP-A- H07 156 156
- JP-A- H07 284 617
- JP-A- H07 300 889
- JP-A- H07 323 438
- JP-A- H10 278 075
- JP-A- 2013 233 732

## Description

### Technical Field

The present invention relates to a mesh filter used to filter out foreign matter in fluid, more specifically to a mesh filter molded integrally by injection molding.

### Background Art

A mesh filter is installed in an intermediate point of, for example, a fuel supply tube connected to a fuel injection apparatus of an automobile or an oil pipe of a lubrication apparatus or the like to filter out foreign matter in fluid such as fuel or oil using the mesh filter.

### (First conventional example)

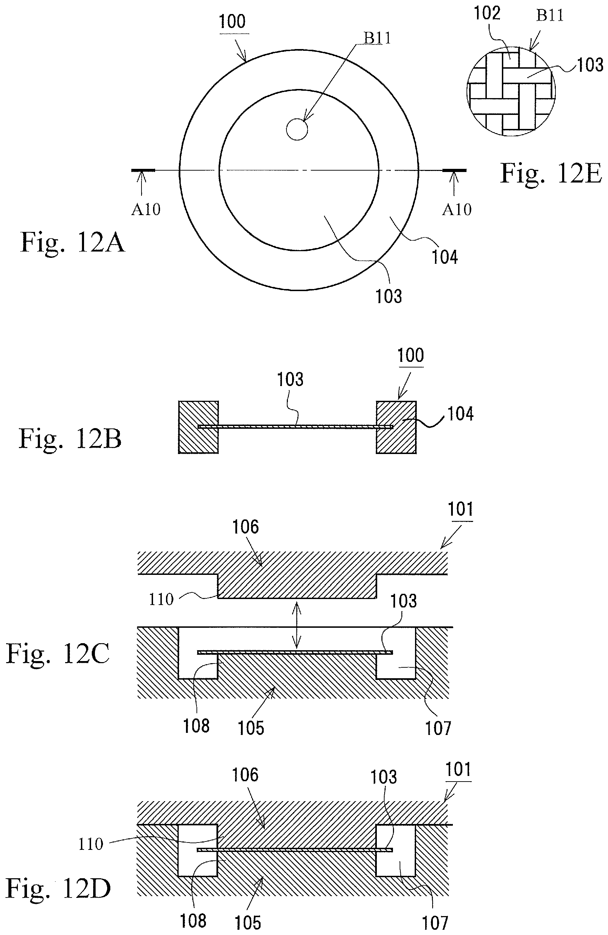

Fig. 12 illustrates a mesh filter 100 according to a first conventional example. Fig. 12A is a plan view illustrating the mesh filter 100 according to the first conventional example and Fig. 12B is a cross sectional view illustrating the mesh filter 100 taken along line A10-A10 in Fig. 12A. Fig. 12C is a cross sectional view of a metal mold 101 illustrating a first stage in a molding method for the mesh filter 100 according to the first conventional example, Fig. 12(d) is a cross sectional view of the metal mold 101 illustrating a second stage in the molding method for the mesh filter 100 according to the first conventional example, and Fig. 12(e) is an enlarged view of part B11 in Fig. 12A.

The mesh filter 100 according to the first conventional example illustrated in Fig. 12 includes a mesh member 103 having many openings 102 (for example, square openings of 0.1 mm x 0.1 mm) that pass oil and filter out foreign matter (such as metal powder or dust) with a predetermined size (for example, a diameter of 0.1 mm) and a resinous frame member 104 attached along the peripheral edge of the mesh member 103 (see Figs. 12A and 12B). This mesh filter 100 is formed by stretching the mesh member 103 over the frame member 104 (see Figs. 12A, 12B, and 12(e)).

The mesh filter 100 according to the first conventional example as described above is insertion-molded as illustrated in Figs. 12C and 12(d). First, in the state in which the first metal mold 105 and the second metal mold 106 are opened, the mesh member 103 is disposed on a base 108 in a cavity 107 of the first metal mold 105 (Fig. 12C). Next, the second metal mold 106 is pushed against the first metal mold 105 (the first metal mold 105 and the second metal mold 106 are closed), the mesh member 103 is sandwiched between a pressing part 110 of the second metal mold 106 and the base 108 of the first metal mold 105, the cavity 107 for shaping the frame member 104 is formed in the parts of the first metal mold 105 and the second metal mold 106 close to the mold contact surface, molten resin is injected from a gate (not illustrated) into the cavity 107 (see Fig. 12(d)), and the resinous frame member 104 is formed integrally along the peripheral edge of the mesh member 103 (see PTL 1 and PTL 2).

However, since the mesh filter 100 according to the first conventional example is manufactured by insertion molding, manufacturing man-hours are increased as compared with the case in which the entire body is integrally molded by injection molding since the process for accommodating the mesh member 103 in a predetermined position in the cavity 107 is necessary.

### (Second conventional art)

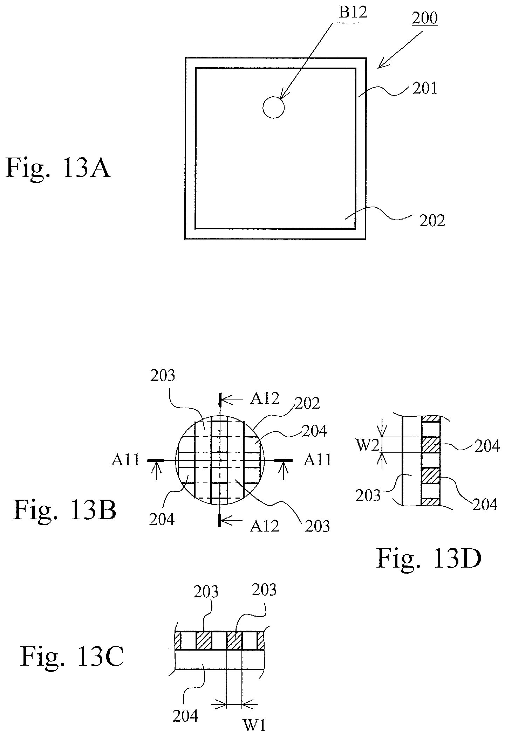

Fig. 13 is a diagram of a mesh filter 200 according to a second conventional example illustrating the mesh filter 200 having been injection-molded. Since the mesh filter 200 illustrated in Fig. 13 has a frame body part 201 and a filter unit 202 formed integrally by injection molding, the problem of the mesh filter 100 according to the first conventional example is not caused (see PTL 3 and PTL 4).

### Citation List

### Patent Literature

PTL 1: JP-UM-A-5-44204
PTL 2: JP-A-2007-1232
PTL 3: JP-A-7-100317 (see particularly the description in paragraph [0008])
PTL 4: JP-A-7-156156 (see particularly the description in paragraph [0008])
PTL 5: EP 3 037 238 A1
PTL 6: DE 10 2004 002 963 A1
PTL 7: JP H03 79320 A
PTL 8: JP H07 323438 A

### Summary of Invention

### Technical Problem

However, in the mesh filter 200 according to the second conventional art, the ratio of a rib width (W1) of a longitudinal rib 203 to a rib width (W2) of a transverse rib 204 is 2 (for example, W1/W2 = 2) (see PTL 3) or the rib spacing of the transverse rib 204 becomes large or small with respect to the rib spacing (small) of the longitudinal rib 203 (see PTL 4). Accordingly, in the mesh filter 200 according to the second conventional art, when the ratio of the rib width (W1) of the longitudinal rib 203 to the rib width (W2) of the transverse rib 204 is 2 (for example, W1/W2 = 2), the opening area of the filter unit 202 is small as compared with the mesh filter 200 in which the rib width of the longitudinal rib 203 is the same as the rib width of the transverse rib 204 (W = W2), so the pressure loss of fluid passing through the filter unit 202 is large, thereby causing reduction in the filter performance. On the other hand, in the mesh filter 200 according to the second conventional art in which the rib spacing of the transverse ribs 204 becomes large or small with respect to the rib spacing (small) of the longitudinal ribs 203, variations are caused in the shape and opening area of the opening portion of the filter unit 202, so foreign matter in fluid having sizes to be removed cannot be filtered out, thereby causing reduction in the filter performance.

An object of the invention is to provide an injection-molded mesh filter that improves the productivity and reduces the product price while maintaining requested filter performance.

### Solution to Problem

The invention is defined in the appended claims.

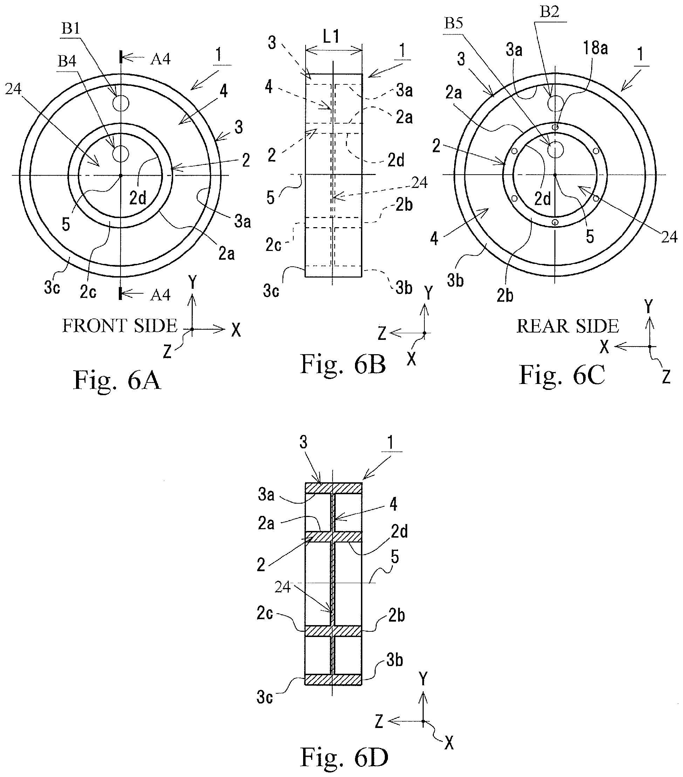

As illustrated in Figs. 6 to 11, a mesh filter 1 according to the invention is used to filter out foreign matter in fluid. The mesh filter 1 according to the invention includes gate connection parts 2 and 26 in which gates 18 and 28 for injection molding are disposed, an outer cylinder 3 surrounding the gate connection parts 2 and 26, and a filter unit 4 connecting an entire circumference of outer peripheral surfaces 2a and 26a of the gate connection parts 2 and 26 to an entire circumference of an inner peripheral surface 3a of the outer cylinder 3 along a radial direction of the gate connection parts 2 and 26. When a virtual plane orthogonal to central axes 5 and 27 of the gate connection parts 2 and 26 is assumed to be an X-Y plane, the filter unit 4 is formed along the X-Y plane. The filter unit 4 except a connection portion connecting to the gate connection parts 2 and 26 and a connection portion connecting to the outer cylinder 3 includes a plurality of longitudinal ribs 6 formed at regular intervals in parallel with each other along the X-Y plane, a plurality of transverse ribs 7 formed at regular intervals in parallel with each other along the X-Y plane, the transverse ribs 7 intersecting with the longitudinal ribs 6, and a plurality of openings 8 formed between the longitudinal ribs 6 and the transverse ribs 7. The longitudinal ribs 6 are disposed on one of a front side and a rear side of the filter unit 4. The transverse ribs 7 are disposed on the other of the front side and the rear side of the filter unit 4. In addition, the openings 8 are formed at intersecting portions of longitudinal grooves 6a between the longitudinal ribs 6 and 6 adjacent to each other and transverse grooves 7a between the transverse ribs 7 and 7 adjacent to each other. A rib width of each of the longitudinal ribs 6 is identical to a rib width of each of the transverse ribs 7 and a groove width of each of the longitudinal grooves 6a is identical to a groove width of each of the transverse grooves 7a. The gate connection parts 2 and 26, the outer cylinder 3 and the filter unit 4 are integrally formed from resin. Molten resin is injected from the gates 18 and 28 opened toward a cavity portion (first cavity portion 14) for shaping the gate connection parts 2 and 26 of a cavity 13 of a metal mold 10 to the cavity portion to form the gate connection parts 2 and 26, the outer cylinder 3, and the filter unit 4 integrally, make rib widths L2 and L3 of the longitudinal ribs 6 and the transverse ribs 7 constant, and make the shapes of the plurality of openings 8 identical.

### Advantageous Effects of Invention

According to the invention, it is possible to integrally mold the entire mesh filter using injection molding, improve the productivity of the mesh filter, and reduce the product price of the mesh filter while maintaining requested filter performance.

### Brief Description of Drawings

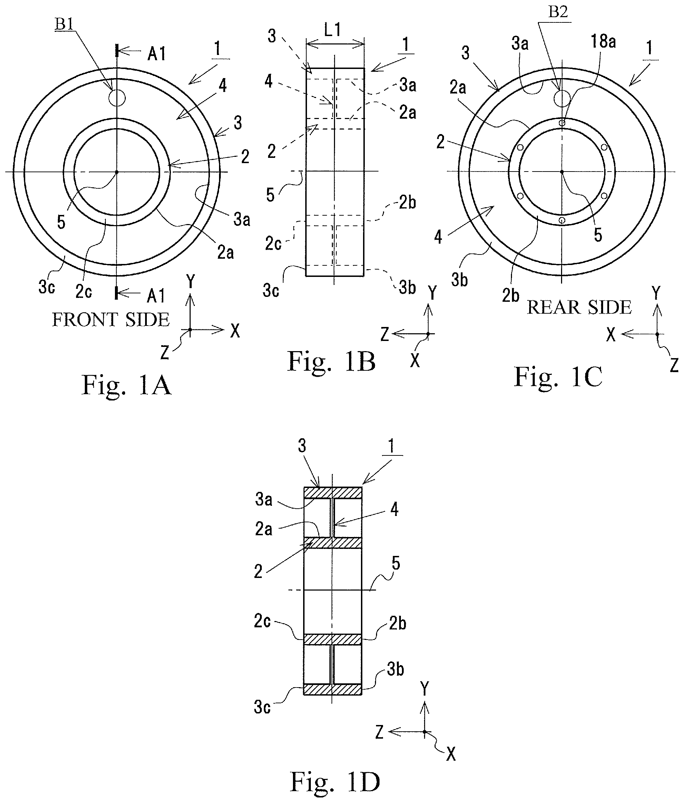

[Fig. 1] Fig. 1 illustrates a mesh filter according to a conventional example, Fig. 1A a front view illustrating the mesh filter, Fig. 1B is a side view illustrating the mesh filter, Fig. 1C is a back view illustrating the mesh filter, and Fig. 1D is a cross sectional view illustrating the mesh filter taken along line A1-A1 in Fig. 1A.

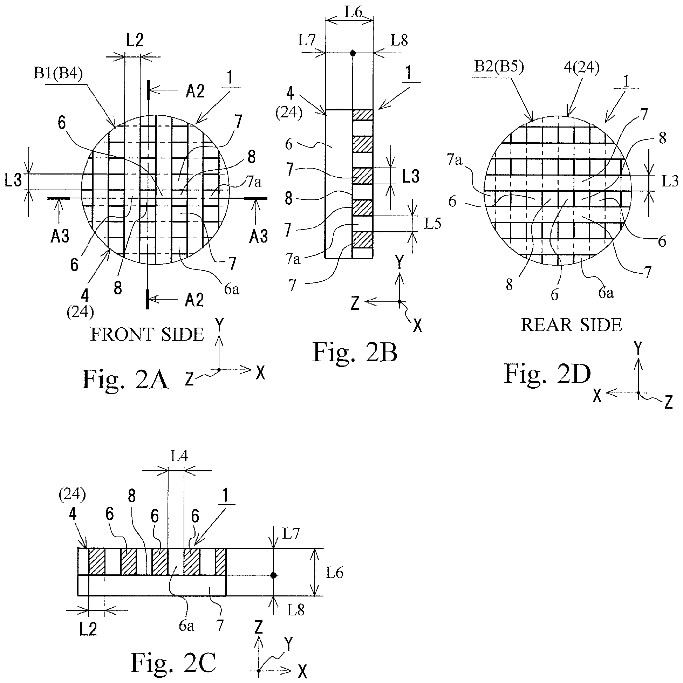

[Fig. 2] Fig. 2A is an enlarged view of part B1 in Fig. 1A, Fig. 2B is a cross sectional view taken along line A2-A2 in Fig. 2A, Fig. 2C is a cross sectional view taken along line A3-A3 in Fig. 2A, and Fig. 2(d) is an enlarged view of part B2 in Fig. 1C.

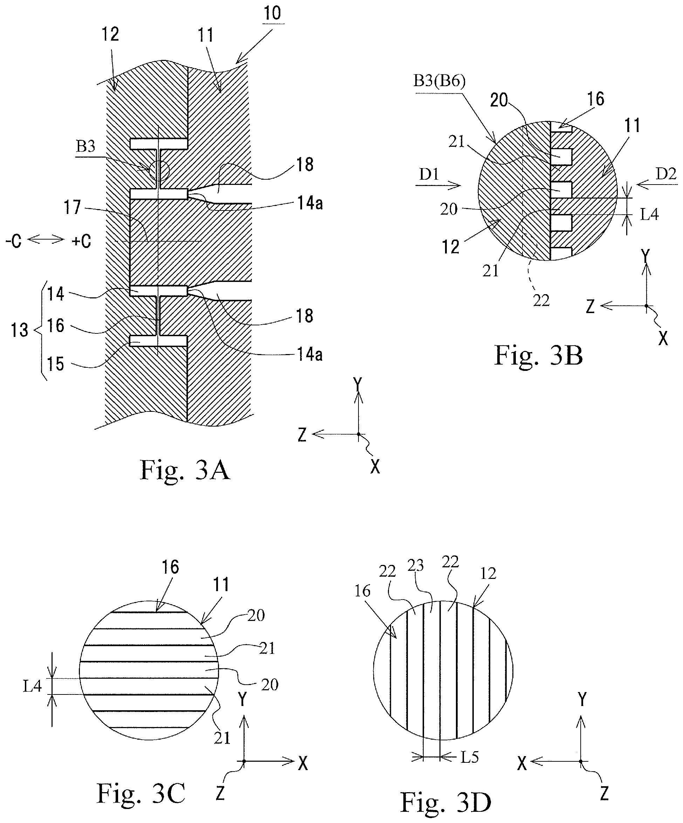

[Fig. 3] Fig. 3 illustrates a metal mold used for injection molding of the mesh filter according to the conventional example, Fig. 3A is a vertical cross sectional view illustrating the metal mold, Fig. 3B is an enlarged view of part B3 in Fig. 3A, Fig. 3C is a plan view illustrating a part of a first metal mold seen from the direction indicated by D1 in Fig. 3B, and Fig. 3D is a plan view illustrating a part of a second metal mold seen from the direction indicated by D2 in Fig. 3B.

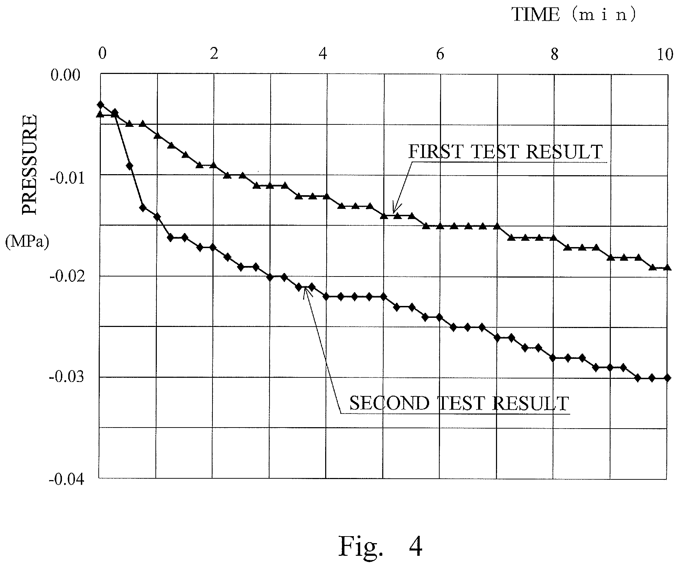

[Fig. 4] Fig. 4 illustrates the result of a filtration test using the mesh filter according to the conventional example.

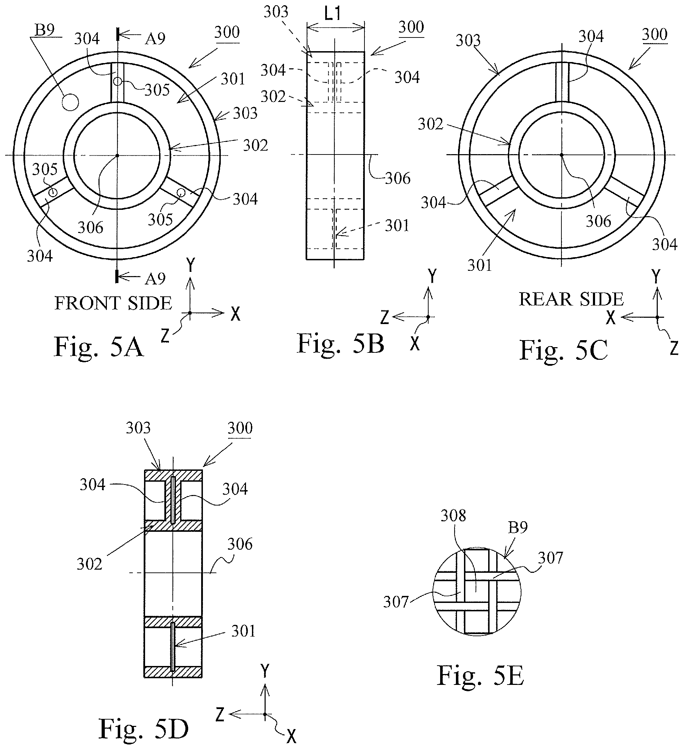

[Fig. 5] Fig. 5 illustrates a mesh filter according to a comparison example, Fig. 5A is a front view illustrating the mesh filter, Fig. 5B is a side view illustrating the mesh filter, Fig. 5C is a back view illustrating the mesh filter, Fig. 5D is a cross sectional view illustrating the mesh filter taken along line A9-A9 in Fig. 5A, and Fig. 5E is an enlarged view of part B9 in Fig. 5A.
[Fig. 6] Fig. 6 illustrates a mesh filter according to a first embodiment of the invention, Fig. 6A a front view illustrating the mesh filter, Fig. 6B is a side view illustrating the mesh filter, Fig. 6C is a back view illustrating the mesh filter, and Fig. 6D is a cross sectional view illustrating the mesh filter taken along line A4-A4 in Fig. 6A.

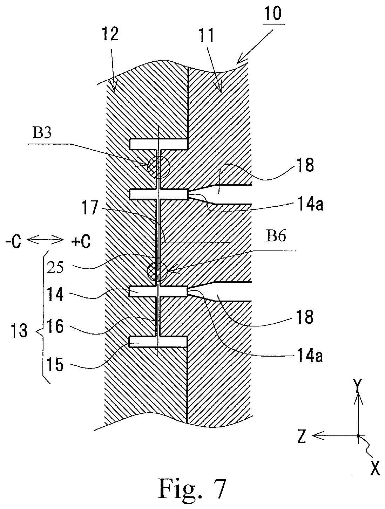

[Fig. 7] Fig. 7 is a diagram of a metal mold used for injection molding of the mesh filter according to the first embodiment of the invention illustrating a cross sectional view corresponding to Fig. 3A.

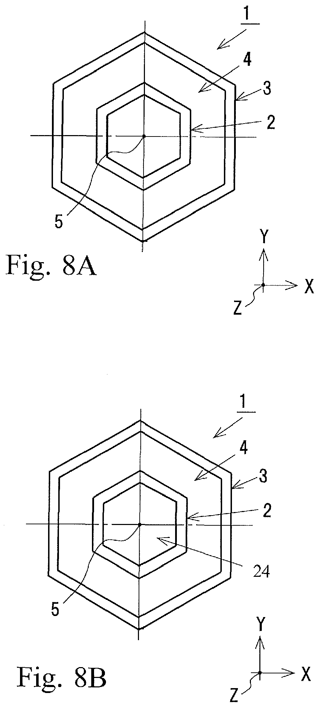

[Fig. 8] Fig. 8 is a diagram (diagram corresponding to Fig. 1A and Fig. 6A) of a mesh filter according to a second embodiment of the invention illustrating a mesh filter according to a modification of the first embodiment.

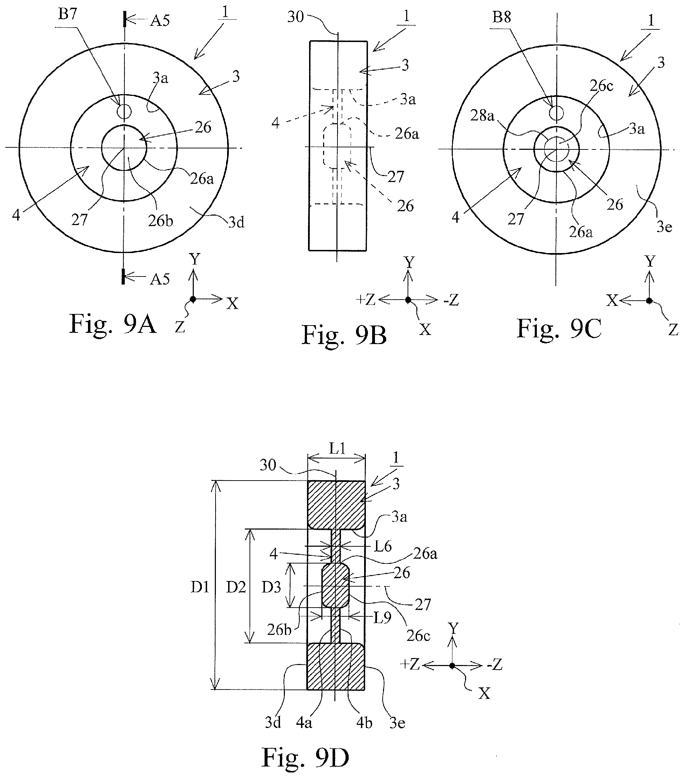

[Fig. 9] Fig. 9 is a diagram of a mesh filter according to a third embodiment of the invention, Fig. 9A is a front view illustrating the mesh filter, Fig. 9B is a side view illustrating the mesh filter, Fig. 9C is a back view illustrating mesh filter, and Fig. 9D is a cross sectional view illustrating the mesh filter taken along line A5-A5 in Fig. 9A.

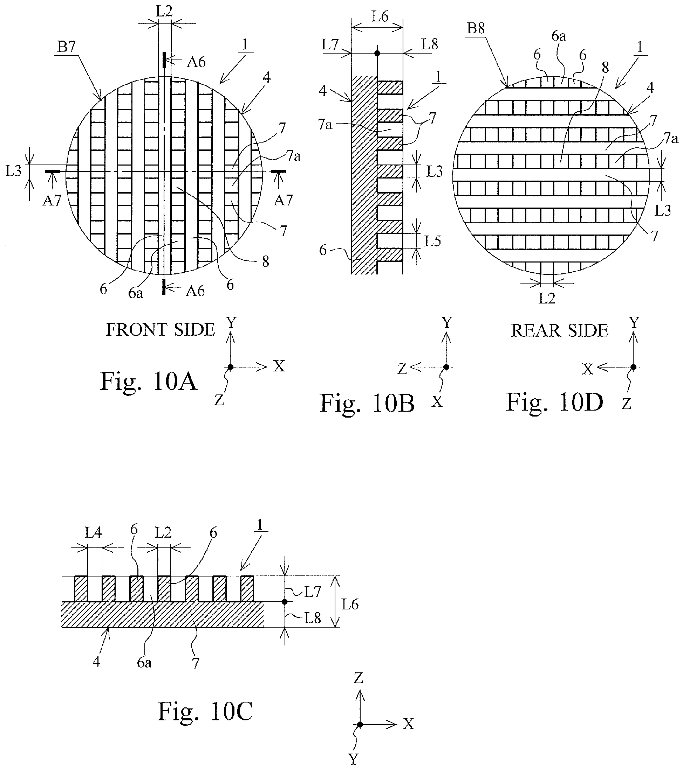

[Fig. 10] Fig. 10A is an enlarged view of part B7 in Fig. 9A, Fig. 10B is a cross sectional view taken along line A6-A6 in Fig. 10A, Fig. 10C is a cross sectional view taken along line A7-A7 in Fig. 10A, and Fig. 10D is an enlarged view of part B8 in Fig. 9C.

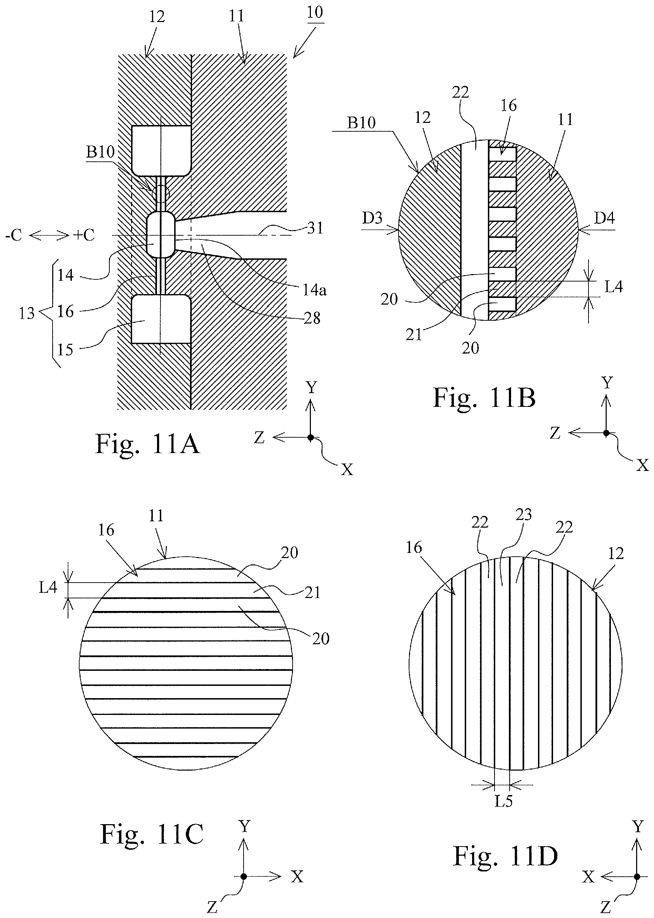

[Fig. 11] Fig. 11 illustrates a metal mold used for injection molding of the mesh filter according to the third embodiment of the invention, Fig. 11A is a vertical cross sectional view illustrating the metal mold, Fig. 11B is an enlarged view of part B10 in Fig. 11A, Fig. 11C is a plan view of a part of a first metal mold seen from the direction indicated by D3 in Fig. 11B, and Fig. 11D is a plan view illustrating a part of a second metal mold seen from the direction indicated by D4 in Fig. 11B.
[Fig. 12] Fig. 12 illustrates a mesh filter according to a further conventional example, Fig. 12A is a plan view illustrating the mesh filter according to the first conventional example, Fig. 12B is a cross sectional view taken along line A10-A10 in Fig. 12A, Fig. 12C is a cross sectional view of a metal mold illustrating a first stage in a molding method for the mesh filter according to the first conventional example, Fig. 12(d) is a cross sectional view of the metal mold illustrating a second stage in the molding method for the mesh filter according to the first conventional example, and Fig. 12(e) is an enlarged view of part B11 in Fig. 12A.
[Fig. 13] Fig. 13 illustrates a mesh filter according to a further conventional example, Fig. 13A is a plan view illustrating the mesh filter according to the second conventional example, Fig. 13B is an enlarged view of part B12 in Fig. 13A, Fig. 13C is a cross sectional view taken along line A11-A11 in Fig. 13B, and Fig. 13D is a cross sectional view taken along line A12-A12 in Fig. 13B.

### Description of Embodiments

Embodiments of the invention will be described in detail below with reference to the drawings.

### [First conventional example]

Figs. 1 and 2 illustrate the mesh filter 1 according to a conventional example. Fig. 1A a front view illustrating the mesh filter 1, Fig. 1B is a side view illustrating the mesh filter 1, Fig. 1C is a back view illustrating the mesh filter 1, and Fig. 1D is a cross sectional view illustrating the mesh filter 1 taken along line A1-A1 in Fig. 1A. In addition, Fig. 2A is an enlarged view (enlarged view of a part of the mesh filter 1) of part B1 in Fig. 1A, Fig. 2B is a cross sectional view (enlarged cross sectional view of a part of the mesh filter 1) taken along line A2-A2 in Fig. 2A, Fig. 2C is a cross sectional view (enlarged cross sectional view of a part of the mesh filter 1) taken along line A3-A3 in Fig. 2A, and Fig. 2(d) is an enlarged view (enlarged view of a part of the mesh filter 1) of part B2 in Fig. 1C.

As illustrated in Figs. 1 and 2, the mesh filter 1 integrally has the cylindrical inner cylinder 2 (gate connection part, which is an inner frame), the cylindrical outer cylinder 3 (outer frame surrounding the inner frame) concentric with the inner cylinder 2, and the filter unit 4 connecting the outer periphery surface 2a of the inner cylinder 2 with the inner peripheral surface 3a of the outer cylinder 3 along the radial direction. The entire mesh filter 1 is integrally formed by thermoplastic resin (such as POM (polyacetal, for example, M450-44) or nylon 66). This mesh filter 1 is disposed in, for example, a fuel supply tube connected to a fuel injection apparatus of an automobile and the inner cylinder 2 and the outer cylinder 3 are installed in the fuel supply tube or the like via a seal member (not illustrated) to prevent the leakage of fuel (fluid) flowing through the filter unit 4.

The length along the central axis 5 of the inner cylinder 2 and the outer cylinder 3 is a length L1 and one end surface 2b and one end surface 3b along the central axis 5 are present on a single virtual plane orthogonal to the central axis 5 and the other end surface 2c and the other end surface 3c along the central axis 5 are present on a single virtual plane orthogonal to the central axis 5. The relationship between the inner cylinder 2 and the outer cylinder 3 is not limited to that in the embodiment and may be changed depending on the attachment state of the mesh filter 1. The dimensions of the inner cylinder 2 and the outer cylinder 3 along the central axis 5 may be different and the one end surface 2b along the central axis 5 of the inner cylinder 2 may be displaced from the one end surface 3b along the central axis 5 of the outer cylinder 3. In addition, the other end surface 2c along the central axis 5 of the inner cylinder 2 may be displaced from the other end surface 3c along the central axis 5 of the outer cylinder 3.

When the virtual plane orthogonal to the central axis 5 of the inner cylinder 2 is assumed to be an X-Y plane, the filter unit 4 is formed along the X-Y plane. On the front side of the filter unit 4, the plurality of longitudinal ribs 6 extending orthogonally to the X-axis along the Y-axis are formed at regular intervals in parallel with the Y-axis. In addition, on the back surface side of the filter unit 4, the plurality of transverse ribs 7 extending orthogonally to the longitudinal ribs 6 along the X-axis are formed at regular intervals in parallel with the X-axis. In plan view of the filter unit 4, the filter unit 4 except the connection portion connecting to the inner cylinder 2 and the connection portion connecting to the outer cylinder 3 has the square openings 8 between the longitudinal ribs 6 and 6 adjacent to each other and the transverse ribs 7 and 7 adjacent to each other. That is, the openings 8 are formed at the intersecting portions of the longitudinal grooves 6a between the longitudinal ribs 6 and 6 adjacent to each other and the transverse grooves 7a between the transverse ribs 7 and 7 adjacent to each other and the number of openings 8 is the same (two or more) as the number of intersecting portions of the longitudinal grooves 6a and the transverse grooves 7a. In addition, the rib width L2 of the longitudinal rib 6 is the same as the rib width L3 of the transverse rib 7 (L2 = L3). In addition, a groove width L4 of the longitudinal groove 6a is the same as a groove width L5 of the transverse groove 7a (L4 = L5). Accordingly, the shapes in plan view of the plurality of openings 8 are identical (squares having the same opening area). Although the filter unit 4 is formed to connect the middle parts of the inner cylinder 2 and the outer cylinder 3 along the central axis 5 in the radial direction, the invention is not limited to the example and the filter unit 4 may be displaced toward one end along the central axis 5 of the inner cylinder 2 and the outer cylinder 3 or may be displaced toward the other end along the central axis 5 of the inner cylinder 2 and the outer cylinder 3. In addition, in the filter unit 4, the plurality of longitudinal ribs 6 may be formed on the rear side and the plurality of transverse ribs 7 may be formed on the front side.

### (Example)

Next, an example of the mesh filter 1 will be described to facilitate the understanding of the mesh filter 1 according to the embodiment. For example, the mesh filter 1 is formed so that the outer diameter of the inner cylinder 2 is 10 mm, the outer diameter of the outer cylinder 3 is 16 mm, the wall thickness of the inner cylinder 2 is 1 mm, and the wall thickness of the outer cylinder 3 is 1 mm. In addition, the mesh filter 1 is formed so that the rib width L2 of the longitudinal rib 6 and the rib width L3 of the transverse rib 7 are 0.1 mm, the groove width L4 of the longitudinal groove 6a and the groove width L5 of the transverse groove 7a are 0.1 mm, and the length of one side of the square opening 8 is 0.1 mm. In addition, the mesh filter 1 is formed so that a total wall thickness L6 of the filter unit 4 is 0.35 to 0.8 mm, the maximum value of a wall thickness (thickness along the Z-axis) L7 of the longitudinal rib 6 is 0.4 mm, and the maximum value of a wall thickness (thickness along the Z-axis) L8 of the transverse rib 7 is 0.4 mm. When the total wall thickness L6 of the filter unit 4 is 0.35 mm, the wall thickness L7 of the longitudinal rib 6 is 0.2 mm and the wall thickness L8 of the transverse rib 7 is 0.15 mm. Note that the values in the example of the mesh filter 1 are indicated to facilitate the understanding of the mesh filter 1 according to the embodiment as described above and do not limit the mesh filter 1 according to the embodiment, so the values may be changed as appropriate depending on the use condition or the like.

Fig. 3 illustrates the metal mold 10 used for injection molding of the mesh filter 1 according to the embodiment. In Fig. 3, Fig. 3A is a vertical cross sectional view of the metal mold 10, Fig. 3B is an enlarged view (enlarged cross sectional view of a part of the metal mold 10) of part B3 in Fig. 3A, Fig. 3C is a plan view of a part of a first metal mold 11 seen from the direction indicated by D1 in Fig. 3B, and Fig. 3D is a plan view of a part of a second metal mold 12 seen from the direction indicated by D2 in Fig. 3B.

As illustrated in Fig. 3A, in the metal mold 10, there is the cavity 13 for injection molding of the mesh filter 1 in the parts of the first metal mold 11 and the second metal mold 12 close to the mold contact surface. The cavity 13 includes the cylindrical first cavity portion 14 for shaping the inner cylinder 2 of the mesh filter 1, a cylindrical second cavity portion 15 for shaping the outer cylinder 3 of the mesh filter 1, and a hollow discoid third cavity portion 16 for shaping the filter unit 4 of the mesh filter 1. In addition, the first metal mold 11 has, at regular intervals along the circumferential direction of the first cavity portion 14, six pin gates 18 opened toward one end surface 14a in the direction along a central axis 17 of the first cavity portion 14 (see a gate mark 18a in Fig. 1C). The part of the first metal mold 11 that shapes the third cavity portion 16 is provided with a plurality of transverse rib grooves 20 (as many transverse rib grooves 20 as the transverse ribs 7) for shaping the transverse ribs 7 at regular intervals (see Figs. 3B and 3C). The transverse rib groove 20 has a rectangular cross section and has a constant groove width along the X-axis direction. In addition, an inter-transverse rib groove projection 21 for shaping the transverse groove 7a is formed between the transverse rib grooves 20 and 20 adjacent to each other. The inter-transverse rib groove projection 21 has a rectangular cross section and has the constant projection width L4 along the X-axis direction (see Figs. 3B and 3C). In addition, the part of the second metal mold 12 that shapes the third cavity portion 16 is provided with a plurality of longitudinal rib grooves 22 (as many longitudinal rib grooves 22 as the longitudinal ribs 6) for shaping the longitudinal ribs 6 at regular intervals (see Figs. 3B and 3D). The longitudinal rib groove 22 has a rectangular cross section and has a constant groove width (the same groove width as in the transverse rib groove 20) along the Y-axis direction. In addition, an inter-longitudinal rib groove projection 23 for forming the longitudinal groove 6a is formed between the longitudinal rib grooves 22 and 22 adjacent to each other. The cross section of the inter-longitudinal groove projection 23 is rectangular and has the same size as the cross section of the inter-transverse rib groove projection 21 and the inter-longitudinal groove projection 23 has the constant projection width L5 (= L4) along the Y-axis direction.

In the metal mold 10, when the first metal mold 11 and the second metal mold 12 are closed, the inter-transverse rib groove projection 21 of the first metal mold 11 abuts against the inter-longitudinal rib groove projection 23 of the second metal mold 12 so that they intersect substantially at right angles. Accordingly, even when molten thermoplastic resin is injected into the cavity 13, the molten thermoplastic resin is not supplied to the intersecting portion at which the inter-transverse rib groove projection 21 of the first metal mold 11 and the inter-longitudinal rib groove projection 23 of the second metal mold 12 intersect and the intersecting portion at which the inter-transverse rib groove projection 21 of the first metal mold 11 and the inter-longitudinal rib groove projection 23 of the second metal mold 12 intersect is formed into the square opening 8. Accordingly, one side of the square opening 8 has the same size as the projection width L4 of the inter-transverse rib groove projection 21 and the projection width L5 of the inter-longitudinal rib groove projection 23 (L4 = L5). Although the embodiment adopts an aspect in which the pin gates 18 opened toward the cavity 13 are provided in six positions along the circumferential direction of the first cavity portion 14, the invention is not limited to the aspect and the pin gates 18 may be provided in two or more positions according to the outer diameter and the like of the first cavity portion 14. Alternatively, ring gates may be provided instead of the plurality of pin gates 18.

As illustrated in Fig. 3A, in the metal mold 10 having such a structure, molten thermoplastic resin is injected from the plurality of pin gates 18 into the cavity 13 in the state in which the first metal mold 11 and the second metal mold 12 are closed, the pressure in the cavity 13 is kept to a predetermined pressure, and the metal mold 10 is cooled. After that, the second metal mold 12 is separated from the first metal mold 11 in a -C direction (the molds are opened), the mesh filter 1 in the cavity 13 is pushed out of the cavity 13 by an ejector pin (not illustrated), and the mesh filter 1, which is an injection-molded article, is removed from the metal mold 10 (see Figs. 1 and 2). After that, in the metal mold 10, the second metal mold 12 in the open state is moved in a +C direction (direction of approaching the first metal mold 11), the second metal mold 12 is pushed against the first metal mold 11, and the first metal mold 11 and the second metal mold 12 are closed. One cycle of injection molding by the mesh filter 1 according to the embodiment is shorter than one cycle of insertion molding by the mesh filter 100 according to the first conventional example. As a result, the mesh filter 1 according to the embodiment is improved in productivity as compared with the mesh filter 100 according to the first conventional example and is reduced in product price as compared with the mesh filter 100 according to the first conventional example.

Fig. 4 illustrates comparison between the result of a filtration test using the mesh filter 1 according to the embodiment and the result of a filtration test using a mesh filter according to a comparison example.

The mesh filter 1 according to the embodiment, which was used for the filtration test, was formed so that the outer diameter of the inner cylinder 2 is 10 mm, the outer diameter of the outer cylinder 3 is 16 mm, the wall thickness of the inner cylinder 2 is 1 mm, the wall thickness of the outer cylinder 3 is 1 mm, the rib width L2 of the longitudinal rib 6 and the rib width L3 of the transverse rib 7 are 0.1 mm, the groove width L4 of the longitudinal groove 6a and the groove width L5 of the transverse groove 7a are 0.1 mm, one side of the square opening 8 is 0.1 mm, the total wall thickness L6 of the filter unit 4 is 0.35 mm, the wall thickness L7 of the longitudinal rib 6 is 0.2 mm, and the wall thickness L8 of the transverse rib 7 is 0.15 mm (see Fig. 2).

The mesh filter 1 having such dimensions was attached to a test tube so that test liquid passes through only the filter unit 4. In addition, since the wall thickness L7 of the longitudinal rib 6 is larger than the wall thickness L8 of the transverse rib 7 and the stiffness of the longitudinal rib 6 is larger than the stiffness of the transverse rib 7 in the mesh filter 1, the longitudinal rib 6 was disposed on the upstream side to which a large pressure is applied. The test liquid used was adjusted by mixing glass beads having a diameter of 0.105 µm to 0.125 µm with water (solvent) so that the concentration is 0.01 g/L (0.01 grams per liter). The test liquid was sucked by a pump at 1.0 L/min (1.0 liter per minute) from the test tube side downstream of the mesh filter 1 and the pressure difference (pressure loss) in the test tube before and after (upstream and downstream of) the mesh filter 1 was measured using a first pressure gauge disposed in the test tube upstream of the mesh filter 1 and a second pressure gauge disposed in the test tube downstream of the mesh filter 1. The measurement result is illustrated in Fig. 4 as the first test result. In Fig. 4, the horizontal axis represents the elapsed time of the filtration test and the vertical axis represents the pressure loss before and after the mesh filter 1 in the test tube.

Fig. 5 illustrates a mesh filter 300 according to the comparison example. The mesh filter 300 according to the comparison example is formed by insertion molding as in the first conventional example, an inner cylinder 302 is formed by injection molding radially inward of a mesh member 301 formed by weaving synthetic resin fabric (for example, nylon fabric), an outer cylinder 303 is formed by injection molding radially outward of the mesh member 301, and coupling ribs 304 for coupling the inner cylinder 302 and the outer cylinder 303 in a radial direction are formed in three positions at regular intervals along the circumferential direction on the front and rear surfaces of the mesh member 301. The coupling rib 304 fills the inner cylinder 302 and the outer cylinder 303 with molten resin during injection molding by coupling the inner cylinder 302 and the outer cylinder 303 in the radial direction and improves the stiffness of the entire body. In the mesh filter 300 according to the comparison example, the mesh member 301 and the coupling ribs 304 are different from those in the filter unit 4 of the mesh filter 1 according to the embodiment, but the other shapes and dimensions are the same as in the mesh filter 1 according to the embodiment. That is, in the mesh filter 300 according to the comparison example, the outer diameter of the inner cylinder 302 is 10 mm, the outer diameter of the outer cylinder 303 is 16 mm, the wall thickness of the inner cylinder 302 is 1 mm, the wall thickness of the outer cylinder 303 is 1 mm, and the lengths along a central axis 306 of the inner cylinder 302 and the outer cylinder 303 are the length L1, so the mesh filter 300 is the same as the mesh filter 1 according to the embodiment except the filter unit 4 of the mesh filter 1. In the mesh filter 300 according to the comparison example, the mesh member 301 is formed by weaving fabric 307 made of synthetic resin with a diameter of 0.06 mm and one side of a substantially square opening 308 of the mesh member 301 is 0.1 mm. The open area ratio (the ratio of the total area of the opening 308 of the mesh member 301 to the surface area of the mesh member 301 disposed between the inner cylinder 302 and the outer cylinder 303) of the mesh member 301 of the mesh filter 300 according to the comparison example is 39%. In contrast, the open area ratio (the ratio of the total area of the opening 8 to the surface area of the filter unit 4) of the mesh filter 1 according to the embodiment is 25%. Accordingly, the open area ratio of the mesh member 301 of the mesh filter 300 is larger than the open area ratio of the mesh filter 1 according to the embodiment. In the mesh filter 300 according to the comparison example, the gate for injection molding during insertion molding is provided in the coupling ribs 304 on the front side (see a gate mark 305 in Fig. 5A), but the gate for injection molding may be provided in the inner cylinder 302.

The mesh filter 300 according to the comparison example was attached to the test tube so that the test liquid flows through only the mesh member 301, and a filtration test was performed as in the filtration test of the mesh filter 1 according to the embodiment. This test result is illustrated as the second test result in Fig. 4.

In comparison between the result (first test result) of the filtration test of the mesh filter 1 according to the embodiment and the result (second test result) of the filtration test of the mesh filter 300 according to the comparison example illustrated in Fig. 4, the pressure in the test tube reduced at a substantially constant rate over time in the mesh filter 1 according to the embodiment and sudden clogging did not occur. In contrast, in the mesh filter 300 according to the comparison example, sudden reduction in the pressure was caused immediately after the start of the test, sudden clogging occurred, and the pressure in the test tube reduced at a substantially constant rate over time. However, this constant rate is larger than the above constant rate in the mesh filter 1 according to the embodiment. Accordingly, in the mesh filter 1 according to the embodiment, it is easy to predict the cleaning time of or the replacement time of the filter unit 4 as compared with the mesh filter 300 according to the comparison example. Based on the test results illustrated in Fig. 4, it can be seen that clogging does not occur easily and the filtration function can be maintained for a long period of time in the mesh filter 1 according to the embodiment as compared with the mesh filter 300 according to the comparison example.

In addition, since the stiffness of the filter unit 4 is high in the mesh filter 1 according to the embodiment, the shape of the opening 8 does not change and cleaning (removal of glass beads) after the filtration test was easy. In contrast, since the stiffness of the mesh member 301 is low and the shape easily changes in the mesh filter 300 according to the comparison example, the shape of the opening 308 changes and glass beads are pinched by the opening 308 and cleaning after the filtration test was difficult. In addition, since the accuracy of the shape of the opening is low and the shape easily changes in the mesh filter 300 according to the comparison example, foreign matter to be filtered out may pass through the opening.

In the mesh filter 1 according to the embodiment described above, since the entire body (the inner cylinder 2, the outer cylinder 3, and the filter unit 4) is injection-molded integrally and accurately, it is possible to improve the productivity and reduce the product price while maintaining the filter performance as compared with insertion-molding in the first conventional example.

In addition, since the plurality of openings 8 of the filter unit 4 have the same shape, if the mesh filter 1 according to the embodiment is disposed, for example, in a fuel supply tube to be connected to a fuel injection apparatus of an automobile, the foreign matter in fuel exceeding the maximum width of the openings can be filtered out reliably and the fuel from which the foreign matter has been removed can flow through the openings 8. In the mesh filter 200 according to the second conventional example in which the areas of openings in the entire region of the filter unit 202 are not identical, since there are variations in the lower limit value of the diameter of foreign matter that can be filtered out by the filter unit 202, the foreign matter to be passed through the filter unit 202 may be filtered out or the foreign matter to be filtered out by the filter unit 202 may be passed, thereby making the filter performance insufficient. However, in the mesh filter 1 according to the embodiment, the lower limit value of the diameter of foreign matter that can be filtered out does not vary and the filter performance can be improved as compared with the case in which there are variations in the areas of the openings.

In the mesh filter 1 according to the embodiment, since the rib width L2 of the longitudinal rib 6 is the same as the rib width L3 of the transverse rib 7 (L2 = L3), the number of the openings 8 per unit area in the filter unit 4 can be increased and the opening area of the filter unit 4 can be expanded, as compared with the mesh filter 200 according to the second conventional example in which the rib width (W1) of the longitudinal rib 203 is twice (for example, W1/W2 = 2 and W2 = L3) as large as the rib width (W2) of the transverse rib 204. As a result, in the mesh filter 1 according to the embodiment, the pressure loss in the filter unit 4 can be reduced and the filter performance can be improved, as compared with the mesh filter 200 according to the second conventional example in which the rib width (W1) of the longitudinal rib 203 is twice as large as the rib width (W2) of the transverse rib 204.

### [First embodiment]

Fig. 6 illustrates the mesh filter 1 according to a first embodiment of the invention. In the mesh filter 1 in Fig. 6 according to the embodiment, the same components as in the mesh filter 1 according to the first embodiment are given the same reference numerals and duplicate descriptions as in the mesh filter 1 according to the first embodiment are omitted.

The mesh filter 1 according to the embodiment is provided with a center side filter unit 24 extending from the central axis 5 of the inner cylinder 2 to an inner peripheral surface 2d of the inner cylinder 2, radially inward of the inner cylinder 2. The center side filter unit 24 is formed as in the filter unit 4 of the mesh filter 1 according to the first embodiment (see Fig. 2). When the particle diameter of foreign matter to be filtered out by the center side filter unit 24 is different from the particle diameter of foreign matter to be filtered out by the filter unit 4, the mesh filter 1 according to the embodiment may change the opening areas of the openings 8 of the center side filter unit 24 and the openings 8 of the filter unit 4 depending on the particle diameter of foreign matter to be filtered out.

Fig. 7 is a diagram of the metal mold 10 used for injection molding of the mesh filter 1 according to the embodiment illustrating a cross sectional view corresponding to Fig. 3A. In the metal mold 10 illustrated in Fig. 7, the same components as in the metal mold 10 in Fig. 3 are given the same reference numerals and duplicate descriptions as the metal mold 10 in Fig. 3 are omitted.

The metal mold 10 illustrated in Fig. 7 has a fourth cavity portion 25 for shaping the center side filter unit 24, radially inward of the first cavity portion 14 for shaping the inner cylinder 2.

In the metal mold 10 according to the embodiment, when molten thermoplastic resin is injected from the pin gate 18 opened toward the first cavity portion 14, the molten thermoplastic resin flows from the first cavity portion 14 toward the third cavity portion 16 and the fourth cavity portion 25 and the entire body (the inner cylinder 2, the outer cylinder 3, the filter unit 4, and the center side filter unit 24) is injection-molded integrally and accurately.

### [Second embodiment]

Fig. 8 is a diagram (diagram corresponding to Fig. 1A and Fig. 6A) of the mesh filter 1 according to the second embodiment of the invention illustrating the mesh filter 1 according to a modification of the first and second embodiments. Fig. 8A illustrates the mesh filter 1 according to a modification of the first embodiment and Fig. 8B illustrates the mesh filter 1 according to a modification of the second embodiment.

As illustrated in Fig. 8, in the mesh filter 1, the front shapes of the inner cylinder 2 and the outer cylinder 3 are regular hexagons. As illustrated above, in the mesh filter 1, the shapes of the inner cylinder 2 and the outer cylinder 3 may be changed depending on the member (such as a fuel tube) to which the inner cylinder 2 and the outer cylinder 3 are attached as long as the leakage of fuel can be prevented. In addition, in the mesh filter 1, the front shapes of the inner cylinder 2 and the outer cylinder 3 may be regular polygons having five or more sides as long as injection molding is enabled and the filter function can be achieved. In addition, the shape of the inner cylinder 2 may be different from the shape of the outer cylinder 3. For example, the front shape of the inner cylinder 2 is a circle while the front shape of the outer cylinder 3 is a regular octagon.

### [Third embodiment]

Figs. 9 and 10 illustrate the mesh filter 1 according to the Third embodiment of the invention. Fig. 9A is a front view illustrating the mesh filter 1, Fig. 9B is a side view illustrating the mesh filter 1, Fig. 9C is a back view illustrating mesh filter 1, and Fig. 9D is a cross sectional view illustrating the mesh filter 1 taken along line A5-A5 in Fig. 9A. Fig. 10A is an enlarged view (enlarged view of a part of the mesh filter 1) of part B7 in Fig. 9A, Fig. 10B is a cross sectional view (enlarged cross sectional view of a part of the mesh filter 1) taken along line A6-A6 in Fig. 10A, Fig. 10C is a cross sectional view (enlarged cross sectional view of a part of the mesh filter 1) taken along line A7-A7 in Fig. 10A, and Fig. 10D is an enlarged view (enlarged view of a part of the mesh filter 1) of part B8 in Fig. 9C.

As illustrated in Figs. 9 and 10, the mesh filter 1 integrally has the discoid gate connection part 26, the outer cylinder 3 (outer frame) positioned concentrically with the central axis 27 of the gate connection part 26 so as to surround the gate connection part 26, and the filter unit 4 connecting the outer periphery surface 26a of the gate connection part 26 with the inner peripheral surface 3a of the outer cylinder 3 along the radial direction. The entire mesh filter 1 is integrally formed by resin (such as POM (polyacetal, for example, M450-44) or nylon 66). The mesh filter 1 as described above is disposed in, for example, a fuel supply tube connected to a fuel injection apparatus of an automobile and the outer cylinder 3 is attached to the fuel supply tube or the like via a seal member (not illustrated) to prevent the leakage of fuel (fluid) flowing through the filter unit 4.

The gate connection part 26 is the portion toward which the gate 28 for injection molding is opened and has the outer dimension equal to or more than the inner diameter of the opening of the gate 28. In addition, since the gate connection part 26 is cut from the gate 28 for injection molding before removal of the mesh filter 1 as a product from the metal mold 10 upon completion of injection molding, the gate connection part 26 has a wall thickness thick enough to prevent breakage by the force applied during the cutting of the gate. A front surface 26b of the gate connection part 26 projects from the front surface of the filter unit 4 by the amount equal to the thickness of the filter unit 4. In addition, a back surface 26c of the gate connection part 26 projects from the back surface of the filter unit 4 by the amount equal to the thickness of the filter unit 4.

The outer cylinder 3 has a front surface 3d projecting along the central axis 27 (+Z-axis direction) from the front surface 26b of the gate connection part 26 and a back surface 3e projecting along the central axis 27 (-Z-axis direction) from the back surface 26c of the gate connection part 26. The outer cylinder 3 accommodates the filter unit 4 and the gate connection part 26 radially inward. The shape of the outer cylinder 3 is changed as appropriate depending on the attachment part structure of the member (such as a control oil supply tube for a hydraulic control apparatus) to which the mesh filter 1 is attached.

When the virtual plane orthogonal to the central axis 27 of the gate connection part 26 is assumed to be an X-Y plane, the filter unit 4 is formed along the X-Y plane. On the front side of the filter unit 4, the plurality of longitudinal ribs 6 extending orthogonally to the X-axis and in parallel with the Y-axis are formed at regular intervals in parallel with the Y-axis. In addition, on the back surface side of the filter unit 4, the plurality of transverse ribs 7 extending orthogonally to the longitudinal ribs 6 and in parallel with the X-axis are formed at regular intervals in parallel with the X-axis. In plan view of the filter unit 4, the filter unit 4 except the connection portion connecting to the gate connection part 26 and the connection portion connecting to the outer cylinder 3 has the square openings 8 between the longitudinal ribs 6 and 6 adjacent to each other and the transverse ribs 7 and 7 adjacent to each other. That is, the openings 8 are formed at intersecting portions of the longitudinal grooves 6a between the longitudinal ribs 6 and 6 adjacent to each other and the transverse grooves 7a between the transverse ribs 7 and 7 adjacent to each other and the number of openings 8 is the same (two or more) as the number of intersecting portions of the longitudinal grooves 6a and the transverse grooves 7a. In addition, the rib width L2 of the longitudinal rib 6 is the same as the rib width L3 of the transverse rib 7 (L2 = L3). In addition, the groove width L4 of the longitudinal groove 6a is the same as the groove width L5 of the transverse groove 7a (L4 = L5). Accordingly, the shapes in plan view of the plurality of openings 8 are identical (squares having the same opening area).

Although the mesh filter 1 is symmetric with respect to a width direction central line 30 of the outer cylinder 3 in Fig. 9B, the filter unit 4 and the gate connection part 26 may be displaced along the central axis 27 (the +z direction or the -z direction) with respect to the width direction central line 30. In addition, in the mesh filter 1 in Fig. 9B, one of the filter unit 4 and the gate connection part 26 may be displaced along the central axis 27 (the +z direction or the -z direction) with respect to the width direction central line 30 of the outer cylinder 3. In addition, in the filter unit 4, the plurality of longitudinal ribs 6 may be formed on the rear side and the plurality of transverse ribs 7 may be formed on the front side.

### (Example)

Next, an example of the mesh filter 1 will be described to facilitate the understanding of the mesh filter 1 according to the embodiment. For example, the mesh filter 1 is formed so that the outer diameter D1 of the outer cylinder 3 is 7.0 mm, the width (the length along the central axis 27) L1 of the outer cylinder 3 is 2 mm, the inner diameter D2 of the outer cylinder 3 is 4 mm, an outer diameter D3 of the gate connection part 26 is 1.5 mm, a width (width along the central axis 27) L9 of the gate connection part 26 is 0.9 mm. In addition, the mesh filter 1 is formed so that the rib width L2 of the longitudinal rib 6 and the rib width L3 of the transverse rib 7 are 0.07 mm, the groove width L4 of the longitudinal groove 6a and the groove width L5 of the transverse groove 7a are 0.077 mm, and the length of one side of the square opening 8 is 0.077 mm. In addition, the mesh filter 1 is formed so that the total wall thickness L6 of the filter unit 4 is 0.3 mm, the wall thickness (thickness along the Z-axis) L7 of the longitudinal rib 6 is 0.15 mm, and the wall thickness (thickness along the Z-axis) L8 of the transverse rib 7 is 0.15 mm. In addition, the inner diameter (diameter of a gate mark 28a) of the gate is 0.8 mm. Note that the values in the example of the mesh filter 1 are indicated to facilitate the understanding of the mesh filter 1 according to the embodiment as described above and do not limit the mesh filter 1 according to the embodiment, so the values may be changed as appropriate depending on the use condition or the like.

Fig. 11 illustrates the metal mold 10 used for injection molding of the mesh filter 1 according to the embodiment. In Fig. 11, Fig. 11A is a vertical cross sectional view illustrating the metal mold 10, Fig. 11B is an enlarged view (enlarged cross sectional view of a part of the metal mold 10) of part B10 in Fig. 11A, Fig. 11C is a plan view of a part of the first metal mold 11 seen from the direction indicated by D3 in Fig. 11B, and Fig. 11D is a plan view illustrating a part of the second metal mold 12 seen from the direction indicated by D4 in Fig. 11B.

As illustrated in Fig. 11A, in the metal mold 10, there is the cavity 13 for injection molding of the mesh filter 1 in the parts of the first metal mold 11 and the second metal mold 12 close to the mold contact surface. The cavity 13 includes the discoid first cavity portion 14 for shaping the gate connection part 26 of the mesh filter 1, the cylindrical second cavity portion 15 for shaping the outer cylinder 3 of the mesh filter 1, and the hollow discoid third cavity portion 16 for shaping the filter unit 4 of the mesh filter 1. In addition, the first metal mold 11 has, at the center of the first cavity portion 14, one gate 28 opened toward the one end surface 14a in the direction along a central axis 31 of the first cavity portion 14 (see the gate mark 28a in Fig. 9C). The part of the first metal mold 11 that shapes the third cavity portion 16 is provided with the plurality of transverse rib grooves 20 (as many transverse rib grooves 20 as the transverse ribs 7) for shaping the transverse ribs 7 at regular intervals (see Figs. 11B and 11C). The transverse rib groove 20 has a rectangular cross section and has a constant groove width along the X-axis direction. In addition, the inter-transverse rib groove projection 21 for shaping the transverse groove 7a is formed between the transverse rib grooves 20 and 20 adjacent to each other. The inter-transverse rib groove projection 21 has a rectangular cross section and has the constant projection width L4 along the X-axis direction (see Figs. 11B and 11C). In addition, the part of the second metal mold 12 that shapes the third cavity portion 16 is provided with the plurality of longitudinal rib grooves 22 (as many longitudinal rib grooves 22 as the longitudinal ribs 6) for shaping the longitudinal ribs 6 at regular intervals (see Figs. 11B and 11D). The longitudinal rib groove 22 has a rectangular cross section and has a constant groove width (the same groove width as in the transverse rib groove 20) along the Y-axis direction. In addition, the inter-longitudinal rib groove projection 23 for shaping the longitudinal groove 6a is formed between the longitudinal rib grooves 22 and 22 adjacent to each other. The cross section of the inter-longitudinal groove projection 23 is rectangular and has the same size as the cross section of the inter-transverse groove projection 21 and the inter-longitudinal groove projection 23 has the constant projection width L5 (= L4) along the Y-axis direction.

In the metal mold 10, when the first metal mold 11 and the second metal mold 12 are closed, the inter-transverse rib groove projection 21 of the first metal mold 11 abuts against the inter-longitudinal rib groove projection 23 of the second metal mold 12 so that the inter-transverse rib groove projection 21 and the inter-longitudinal rib groove projection 23 intersect substantially at right angles. Accordingly, even when molten resin is injected into the cavity 13, the molten resin is not supplied to the intersecting portion at which the inter-transverse rib groove projection 21 of the first metal mold 11 intersects with the inter-longitudinal rib groove projection 23 of the second metal mold 12 and the intersecting portion at which the inter-transverse rib groove projection 21 of the first metal mold 11 intersects with the inter-longitudinal rib groove projection 23 of the second metal mold 12 intersect is formed into the square opening 8. Accordingly, the length of one side of the square opening 8 is the same as the projection width L4 of the inter-transverse rib groove projection 21 and the projection width L5 of the inter-longitudinal rib groove projection 23 (L4 = L5). Although the embodiment adopts an aspect in which the one gate 28 opened toward the cavity 13 is provided only at the center of the first cavity portion 14, the invention is not limited to the aspect and the gates 28 may be provided in two or more positions according to the outer diameter and the like of the first cavity portion 14.

As illustrated in Fig. 11A, in the metal mold 10 having such a structure, molten resin is injected from the gate 28 into the cavity 13 in the state in which the first metal mold 11 and the second metal mold 12 are closed, the pressure in the cavity 13 is kept to a predetermined pressure, and the metal mold 10 is cooled. After that, the gate 28 is cut from the injection-molded article (mesh filter) in the cavity 13, the second metal mold 12 is separated from the first metal mold 11 in the -C direction (the molds are opened), the mesh filter 1 in the cavity 13 is pushed out of the cavity 13 by an ejector pin (not illustrated), and the mesh filter 1, which is the injection-molded article, is removed from the metal mold 10 (see Figs. 9 and 10). After that, in the metal mold 10, the second metal mold 12 in the open state is moved in the +C direction (direction of approaching the first metal mold 11), the second metal mold 12 is pushed against the first metal mold 11, and the first metal mold 11 and the second metal mold 12 are closed. One cycle of injection molding of the mesh filter 1 according to the embodiment is shorter than one cycle of insertion molding of the mesh filter 100 according to the first conventional example. As a result, the mesh filter 1 according to the embodiment is improved in productivity as compared with the mesh filter 100 according to the first conventional example and is reduced in the product price as compared with the mesh filter 100 according to the first conventional example.

In the mesh filter 1 according to the embodiment as described above, the cylindrical inner cylinder 2 of the mesh filter 1 according to the first embodiment is replaced with the discoid gate connection part 28 and, even though the dimensions of the outer cylinder 3 and the filter unit 4 are different from those of the mesh filter 1 according to the first embodiment, the basic structure is the same as that of the mesh filter 1 according to the first embodiment. Accordingly, the mesh filter 1 according to the embodiment can obtain effects similar to those of the mesh filter 1 according to the first embodiment.

### [Other embodiments]

Although the mesh filter 1 according to the invention is installed in a fuel supply tube connected to a fuel injection apparatus of an automobile, the mesh filter 1 may be installed at an intermediate point of an oil pipe of a lubrication apparatus or the like of an automobile. The invention is not limited to this example and the mesh filter 1 may be installed in a pipe such as a water supply pipe or an air supply pipe so that foreign matter included in fluid (liquid such as water or gas such as air) can be eliminated in a variety of technical fields.

In addition, the mesh filters 1 according to the first to fourth embodiments are not limited to injection-molded articles made of thermoplastic resin and may be injection-molded articles made of heat-hardening resin. The material of the mesh filters 1 may be selected as appropriate according to intended usages.

In addition, in the mesh filters 1 according to the first to fourth embodiments, although the longitudinal ribs 6 intersect with the transverse ribs 7 at right angles, the invention is not limited to the examples and the longitudinal ribs 6 intersect with the transverse ribs 7 obliquely.

In addition, in the mesh filter 1 according to the fourth embodiment, although the front shape of the gate connection part 26 is circular, the invention is not limited to the example and the front shape of the gate connection part 26 may be polygonal (such as hexagonal), width across flat-shaped, or the like. The front shape of the gate connection part 26 is determined in consideration of the flowage of molten resin during injection molding and the like.

## Claims

1. A mesh filter (1) for filtering out foreign matter in fluid, comprising:
a discoid gate connection part (26);
an outer cylinder (3) positioned concentrically with a central axis (27) of the gate connection part (26) so as to surround the discoid gate connection part (26); and
a filter unit (4) connecting an entire circumference of an outer peripheral surface (26a) of the discoid gate connection part (26) to an entire circumference of an inner peripheral surface (3a) of the outer cylinder (3) along a radial direction of the discoid gate connection part (26);
wherein, when a virtual plane orthogonal to a central axis of the discoid gate connection part (26) is assumed to be an X-Y plane, the filter unit (4) is formed along the X-Y plane,
the filter unit (4) except a connection portion connecting to the discoid gate connection part (26) and a connection portion connecting to the outer cylinder (3) includes a plurality of longitudinal ribs (6) formed at regular intervals in parallel with each other along the X-Y plane, a plurality of transverse ribs (7) formed at regular intervals in parallel with each other along the X-Y plane, the transverse ribs (7) intersecting with the longitudinal ribs (6), and a plurality of openings (8) formed between the longitudinal ribs and the transverse ribs,
the longitudinal ribs (6) are disposed on one of a front side and a rear side of the filter unit,
the transverse ribs (7) are disposed on the other of the front side and the rear side of the filter unit,
the openings are formed at intersecting portions of longitudinal grooves (6a) between the longitudinal ribs (6) adjacent to each other and transverse grooves (7a) between the transverse ribs (7) adjacent to each other, and
wherein a rib width of each of the longitudinal ribs (6) is identical to a rib width of each of the transverse ribs (7) and a groove width of each of the longitudinal grooves (6a) is identical to a groove width of each of the transverse grooves (7a)
wherein the mesh filter is produced by injecting molten thermoplastic resin from a gate opened toward a cavity portion shaping the gate connection part of a cavity of a metal mold into the cavity portion to form the discoid gate connection part (26), the outer cylinder (3), and the filter unit (4) integrally, make rib widths (L2, L3) of the longitudinal ribs (6) and the transverse ribs (7) constant, and make the shapes of the plurality of openings identical, and J Z
wherein a front surface (26b) of the discoid gate connection part (26) projects from the front surface of the filter unit (4) by the amount equal to the thickness of the filter unit, and a back surface (26c) of the discoid gate connection part (26) projects from the back surface of the filter unit (4) by the amount equal to the thickness of the filter unit (4).

2. A mesh filter (1) for filtering out foreign matter in fluid, comprising:
an inner cylinder (2);
an outer cylinder (3) surrounding the inner cylinder (2); and
a filter unit (4) connecting an entire circumference of an outer peripheral surface (2a) of the inner cylinder (2) to an entire circumference of an inner peripheral surface (3a) of the outer cylinder (3) along a radial direction of the inner cylinder (2);
a center side filter unit (24) extending from the central axis (5) of the inner cylinder (2) to an entire circumference of an inner peripheral surface (2d) of the inner cylinder (2)
wherein, when a virtual plane orthogonal to a central axis of the inner cylinder (2) is assumed to be an X-Y plane, the filter unit (4) and the center side filter unit (24) are formed along the X-Y plane,
the filter unit (4) except a connection portion connecting to the inner cylinder (2) and a connection portion connecting to the outer cylinder (3) includes a plurality of longitudinal ribs (6) formed at regular intervals in parallel with a Y-axis orthogonally to an X-axis, a plurality of transverse ribs (7) formed at regular intervals in parallel with the X-axis orthogonally to the longitudinal ribs (6), and a plurality of rectangular openings (8) formed between the longitudinal ribs (6) and the transverse ribs (7),
the center side filter unit (24) except a connection portion connecting to the inner cylinder (2) includes a plurality of longitudinal ribs (6) formed at regular intervals in parallel with a Y-axis orthogonally to an X-axis, a plurality of transverse ribs (7) formed at regular intervals in parallel with the X-axis orthogonally to the longitudinal ribs (6), and a plurality of rectangular openings (8) formed between the longitudinal ribs (6) and the transverse ribs (7),
the longitudinal ribs (6) are disposed on one of a front side and a rear side of the filter unit (4),
the transverse ribs (7) are disposed on the other of the front side and the rear side of the filter unit (4),
the openings (8) are formed at intersecting portions of longitudinal grooves (6a) between the longitudinal ribs (6) adjacent to each other and transverse grooves (7a) between the transverse ribs (7) adjacent to each other, and
wherein the mesh filter is produced by injecting molten thermoplastic resin from a gate opened toward a cavity portion shaping the inner cylinder of a cavity of a metal mold to the cavity portion to form the inner cylinder (2), the outer cylinder (3), the filter unit (4) and the center side filter unit (24) integrally, make rib widths (L1, L2) of the longitudinal ribs (6) and the transverse ribs (7) constant, and make the shapes of the plurality of openings (8) identical.

3. The mesh filter (1) according to claim 2, wherein the opening areas of the openings (8) of the center side filter unit (24) are different from the opening areas of the openings (8) of the filter unit (4).

## Patentansprüche

1. Siebfilter (1) zum Ausfiltern von Fremdstoffen in Fluid, mit:
einem scheibenförmigen Anschnittverbindungsteil (26),
einem Außenzylinder (3), der konzentrisch zu einer Mittelachse (27) des Anschnittverbindungsteils (26) so positioniert ist, dass er den scheibenförmigen Anschnittverbindungsteil (26) umgibt, und
einer Filtereinheit (4), die einen gesamten Umfang einer Außenumfangsfläche (26a) des scheibenförmigen Anschnittverbindungsteils (26) mit einem gesamten Umfang einer Innenumfangsfläche (3a) des Außenzylinders (3) entlang einer Radialrichtung des scheibenförmigen Anschnittverbindungsteils (26) verbindet,
wobei dann, wenn man annimmt, dass eine zu einer Mittelachse des scheibenförmigen Anschnittverbindungsteils (26) orthogonale virtuelle Ebene eine X-Y-Ebene ist, die Filtereinheit (4) entlang der X-Y-Ebene gebildet ist,
die Filtereinheit (4) mit Ausnahme eines Verbindungsabschnitts, der an den scheibenförmigen Anschnittverbindungsteil (26) angeschlossen ist, und eines Verbindungsabschnitts, der an den Außenzylinder (3) angeschlossen ist, mehrere Längsrippen (6), die in regelmäßigen Abständen parallel zueinander entlang der X-Y-Ebene gebildet sind, mehrere Querrippen (7), die in regelmäßigen Abständen parallel zueinander entlang der X-Y-Ebene gebildet sind, wobei die Querrippen (7) sich mit den Längsrippen (6) schneiden, und mehrere Öffnungen (8) aufweist, die zwischen den Längsrippen und den Querrippen gebildet sind,
die Längsrippen (6) auf einer Vorderseite oder einer Rückseite der Filtereinheit angeordnet sind,
die Querrippen (7) auf der jeweils anderen Seite, also der Rückseite oder der Vorderseite, der Filtereinheit angeordnet sind,
die Öffnungen an sich schneidenden Abschnitten von Längsnuten (6a) zwischen den benachbarten Längsrippen (6) und Quernuten (7a) zwischen den benachbarten Querrippen (7) gebildet sind, und
wobei eine Rippenbreite jeder der Längsrippen (6) mit einer Rippenbreite jeder der Querrippen (7) identisch ist und eine Nutbreite jeder der Längsnuten (6a) mit einer Nutbreite jeder der Quernuten (7a) identisch ist,
wobei der Siebfilter durch Einspritzen von geschmolzenem thermoplastischen Harz von einem Anschnitt hergestellt ist, der zu einem Hohlraumabschnitt hin geöffnet ist, der den Anschnittverbindungsteil eines Hohlraums einer Metallform zu dem Hohlraumabschnitt formt, um den scheibenförmigen Anschnittverbindungsteil (26), den Außenzylinder (3) und die Filtereinheit (4) einstückig auszubilden, Rippenbreiten (L2, L3) der Längsrippen (6) und der Querrippen (7) konstant zu machen und die Formen der mehreren Öffnungen identisch zu machen, und
wobei eine vordere Fläche (26b) des scheibenförmigen Anschnittverbindungsteils (26) von der vorderen Fläche der Filtereinheit (4) um den Betrag vorsteht, der gleich der Dicke der Filtereinheit ist, und eine hintere Fläche (26c) des scheibenförmigen Anschnittverbindungsteils (26) von der hinteren Fläche der Filtereinheit (4) um den Betrag vorsteht, der gleich der Dicke der Filtereinheit (4) ist.

2. Siebfilter (1) zum Ausfiltern von Fremdstoffen in Fluid, mit:
einem Innenzylinder (2),
einem Außenzylinder (3), der den Innenzylinder (2) umgibt, und
einer Filtereinheit (4), die einen gesamten Umfang einer Außenumfangsfläche (2a) des Innenzylinders (2) mit einem gesamten Umfang einer Innenumfangsfläche (3a) des Außenzylinders (3) entlang einer Radialrichtung des Innenzylinders (2) verbindet,
einer zentrumsseitigen Filtereinheit (24), die sich von der Mittelachse (5) des Innenzylinders (2) zu einem gesamten Umfang einer Innenumfangsfläche (2d) des Innenzylinders (2) erstreckt,
wobei dann, wenn man annimmt, dass eine zu einer Mittelachse des Innenzylinders (2) orthogonale virtuelle Ebene eine X-Y-Ebene ist, die Filtereinheit (4) und die zentrumsseitige Filtereinheit (24) entlang der X-Y-Ebene gebildet sind,
die Filtereinheit (4) mit Ausnahme eines Verbindungsabschnitts, der an den Innenzylinder (2) angeschlossen ist, und eines Verbindungsabschnitts, der an den Außenzylinder (3) angeschlossen ist, mehrere Längsrippen (6), die in regelmäßigen Abständen parallel zu einer Y-Achse orthogonal zu einer X-Achse gebildet sind, mehrere Querrippen (7), die in regelmäßigen Abständen parallel zur X-Achse orthogonal zu den Längsrippen (6) gebildet sind, und mehrere rechteckige Öffnungen (8) aufweist, die zwischen den Längsrippen (6) und den Querrippen (7) gebildet sind,
die zentrumsseitige Filtereinheit (24) mit Ausnahme eines Verbindungsabschnitts, der an den Innenzylinder (2) angeschlossen ist, mehrere Längsrippen (6), die in regelmäßigen Abständen parallel zu einer Y-Achse orthogonal zu einer X-Achse gebildet sind, mehrere Querrippen (7), die in regelmäßigen Abständen parallel zur X-Achse orthogonal zu den Längsrippen (6) gebildet sind, und mehrere rechteckige Öffnungen (8) aufweist, die zwischen den Längsrippen (6) und den Querrippen (7) gebildet sind,
die Längsrippen (6) auf einer Vorderseite oder einer Rückseite der Filtereinheit (4) angeordnet sind,
die Querrippen (7) auf der jeweils anderen Seite, also der Rückseite oder der Vorderseite, der Filtereinheit (4) angeordnet sind,
die Öffnungen (8) an sich schneidenden Abschnitten von Längsnuten (6a) zwischen den benachbarten Längsrippen (6) und Quernuten (7a) zwischen den benachbarten Querrippen (7) gebildet sind, und
wobei der Siebfilter durch Einspritzen von geschmolzenem thermoplastischen Harz von einem Anschnitt hergestellt ist, der zu einem Hohlraumabschnitt hin geöffnet ist, der den Innenzylinder eines Hohlraums einer Metallform zu dem Hohlraumabschnitt formt, um den Innenzylinder (2), den Außenzylinder (3), die Filtereinheit (4) und die zentrumsseitige Filtereinheit (24) einstückig auszubilden, Rippenbreiten (L1, L2) der Längsrippen (6) und der Querrippen (7) konstant zu machen und die Formen der mehreren Öffnungen (8) identisch zu machen.

3. Siebfilter (1) nach Anspruch 2, wobei die Öffnungsflächen der Öffnungen (8) der zentrumsseitigen Filtereinheit (24) von den Öffnungsflächen der Öffnungen (8) der Filtereinheit (4) verschieden sind.

## Revendications

1. Filtre à tamis (1) pour le filtrage de matières étrangères dans du fluide, comprenant :
une partie de raccordement d'entrée (26) en forme de disque ;
un cylindre extérieur (3) agencé de manière concentrique par rapport à un axe central (27) de la partie de raccordement d'entrée (26) de manière à entourer la partie de raccordement d'entrée (26) en forme de disque ; et
une unité de filtrage (4) raccordant une circonférence entière d'une surface périphérique extérieure (26a) de la partie de raccordement d'entrée (26) en forme de disque à une circonférence entière d'une surface périphérique intérieure (3a) du cylindre extérieur (3) selon un sens radial de la partie de raccordement d'entrée (26) en forme de disque ;
l'unité de filtrage (4) étant réalisée le long du plan X-Y, lorsqu'un plan virtuel orthogonal à un axe central de la partie de raccordement d'entrée (26) en forme de disque est supposé être un plan X-Y,
l'unité de filtrage (4), à l'exception d'un tronçon de raccordement raccordé à la partie de raccordement d'entrée (26) en forme de disque et d'un tronçon de raccordement raccordé au cylindre extérieur (3), présentant une pluralité de nervures longitudinales (6) réalisées à intervalles réguliers de manière parallèle les unes aux autres le long du plan X-Y, une pluralité de nervures transversales (7) réalisées à intervalles réguliers de manière parallèle les unes aux autres le long du plan X-Y, les nervures transversales (7) coupant les nervures longitudinales (6), et une pluralité d'ouvertures (8) réalisées entre les nervures longitudinales et les nervures transversales,
les nervures longitudinales (6) étant agencées d'un côté avant ou d'un côté arrière de l'unité de filtrage,
les nervures transversales (7) étant agencées de l'autre côté respectif, du côté arrière ou du côté avant de l'unité de filtrage,
les ouvertures étant réalisées au niveau de tronçons d'intersection de rainures longitudinales (6a) entre les nervures longitudinales adjacentes (6) et de rainures transversales (7a) entre les nervures transversales adjacentes (7), et
une largeur de nervure de chacune des nervures longitudinales (6) étant identique à une largeur de nervure de chacune des nervures transversales (7), et une largeur de rainure de chacune des rainures longitudinales (6a) étant identique à une largeur de rainure de chacune des rainures transversales (7a),
le filtre à tamis étant fabriqué en injectant de la résine thermoplastique fondue depuis une entrée ouverte vers un tronçon de cavité formant la partie de raccordement d'entrée d'une cavité d'un moule métallique, dans le tronçon de cavité pour réaliser la partie de raccordement d'entrée (26) en forme de disque, le cylindre extérieur (3), et l'unité de filtrage (4) d'un seul tenant, rendre les largeurs de nervure (L2, L3) des nervures longitudinales (6) et des nervures transversales (7) constantes, et rendre les formes des plusieurs ouvertures identiques, et
une face avant (26b) de la partie de raccordement d'entrée (26) en forme de disque faisant saillie de la surface avant de l'unité de filtrage (4) du montant égal à l'épaisseur de l'unité de filtrage, et une surface arrière (26c) de la partie de raccordement d'entrée (26) en forme de disque faisant saillie de la surface arrière de l'unité de filtrage (4) du montant égal à l'épaisseur de l'unité de filtrage (4).

2. Filtre à tamis (1) pour le filtrage de matières étrangères dans du fluide, comprenant :
un cylindre intérieur (2);
un cylindre extérieur (3) qui entoure le cylindre intérieur (2) ; et
une unité de filtrage (4) raccordant une circonférence entière d'une surface périphérique extérieure (2a) du cylindre intérieur (2) à une circonférence entière d'une surface périphérique intérieure (3a) du cylindre extérieur (3) selon un sens radial du cylindre intérieur (2) ;
une unité de filtrage (24) côté centre qui s'étend depuis l'axe central (5) du cylindre intérieur (2) vers une entière circonférence d'une surface périphérique intérieure (2d) du cylindre intérieur (2) ;
l'unité de filtrage (4) et l'unité de filtrage (24) côté centre étant réalisées le long du plan X-Y, lorsqu'un plan virtuel orthogonal à un axe central du cylindre intérieur (2) est supposé être un plan X-Y,
l'unité de filtrage (4), à l'exception d'un tronçon de raccordement raccordé au cylindre intérieur (2) et d'un tronçon de raccordement raccordé au cylindre extérieur (3), présentant une pluralité de nervures longitudinales (6) réalisées à intervalles réguliers de manière parallèle à un axe Y orthogonalement à un axe X, une pluralité de nervures transversales (7) réalisées à intervalles réguliers de manière parallèle à l'axe X orthogonalement aux nervures longitudinales (6), et une pluralité d'ouvertures rectangulaires (8) réalisées entre les nervures longitudinales (6) et les nervures transversales (7),
l'unité de filtrage (24) côté centre, à l'exception d'un tronçon de raccordement raccordé au cylindre intérieur (2), présentant une pluralité de nervures longitudinales (6) réalisées à intervalles réguliers de manière parallèle à un axe Y orthogonalement à un axe X, une pluralité de nervures transversales (7) réalisées à intervalles réguliers de manière parallèle à l'axe X orthogonalement aux nervures longitudinales (6), et une pluralité d'ouvertures rectangulaires (8) réalisées entre les nervures longitudinales (6) et les nervures transversales (7),
les nervures longitudinales (6) étant agencées d'un côté avant ou d'un côté arrière de l'unité de filtrage (4),
les nervures transversales (7) étant agencées de l'autre côté respectif, du côté arrière ou du côté avant de l'unité de filtrage (4),
les ouvertures (8) étant réalisées au niveau de tronçons d'intersection de rainures longitudinales (6a) entre les nervures longitudinales adjacentes (6) et de rainures transversales (7a) entre les nervures transversales adjacentes (7), et
le filtre à tamis étant fabriqué en injectant de la résine thermoplastique fondue depuis une entrée ouverte vers un tronçon de cavité formant le cylindre intérieur d'une cavité d'un moule métallique, vers le tronçon de cavité pour réaliser le cylindre intérieur (2), le cylindre extérieur (3), l'unité de filtrage (4) et l'unité de filtrage (24) côté centre d'un seul tenant, rendre les largeurs de nervure (L1, L2) des nervures longitudinales (6) et des nervures transversales (7) constantes, et rendre les formes des plusieurs ouvertures (8) identiques.

3. Filtre à tamis (1) selon la revendication 2, les surfaces d'ouverture des ouvertures (8) de l'unité de filtrage (24) côté centre étant différentes des surfaces d'ouverture des ouvertures (8) de l'unité de filtrage (4).
